# EUROPÄISCHE PATENTSCHRIFT

(11) **EP 1 283 624 B1**
(45) Veröffentlichungstag und Bekanntmachung des Hinweises auf die Patenterteilung: **26.07.2006**
(21) Anmeldenummer: 02102109.2
(22) Anmeldetag: 07.08.2002
(51) Int. Cl.: H04L 12/56, H04Q 11/04

(54) **Parallel und iterative arbeitende Berechnungsvorschrift zur Vermeidung von Datenpaketen**
Prescribed calculation that works parallel an iterative for the avoidance of data packets
Calculation préscite qui travaille parallèlement et itérativement pour éviter des paquets de données

(30) Priorität: 09.08.2001 DE 10139233
(43) Veröffentlichungstag der Anmeldung: 12.02.2003
(73) Patentinhaber: Philips Intellectual Property & Standards GmbH, 20099 Hamburg (DE); Koninklijke Philips Electronics N.V., 5621 BA Eindhoven (NL)
(72) Erfinder: van Wageningen, Andries, 52088, Aachen (DE); Reumerman, Hans-Jürgen, 52088, Aachen (DE); Lelkens, Armand, 52088, Aachen (DE); Schoenen, Rainer, 52088, Aachen (DE)
(74) Vertreter: Volmer, Georg

(56) Entgegenhaltungen:
- US-A- 5 267 235
- US-A- 5 500 858
- RAINER SCHOENEN, GUIDE POST, GERALD SANDER: "Weighted Arbitration Algorithms with Priorities for Input-Queued Switches with 100% throughput" IEEE INTERNATIONAL WORKSHOP ON BROADBAND SWITCHING SYSTEMS, [Online] Juni 1999 (1999-06), Seiten 1-5, XP002250376 Gefunden im Internet: <URL:http://citeseer.nj.nec.com/schoenen99 weighted.html> [gefunden am 2003-08-06]
- CHAO-JU HOU ET AL: "Priority-based high-speed switch scheduling for ATM networks" LOCAL COMPUTER NETWORKS, 1995., PROCEEDINGS. 20TH CONFERENCE ON MINNEAPOLIS, MN, USA 16-19 OCT. 1995, LOS ALAMITOS, CA, USA,IEEE COMPUT. SOC, US, 16. Oktober 1995 (1995-10-16), Seiten 19-28, XP010196315 ISBN: 0-8186-7162-9

## Beschreibung

Die Erfindung bezieht sich auf eine Paketvermittlungsvorrichtung mit mehreren Leitungs- und Vermittlungseinheiten.

In der Veröffentlichung "Weighted Arbitration Algorithms with Priorities for Input-Queued Switches with 100% Throughput" von R. Schoenen, G. Post, G. Sander, Broadband Switching Symposium '99, werden verschiedene, gewichtete Vermittlungsalgorithmen einer Paketvermittlungsvorrichtung verglichen. Die Vermittlungsalgorithmen versuchen mit unterschiedlichen Vermittlungsschritten eine Kollision mehrerer für den selben Ausgangsport der Paketvermittlungsvorrichtung bestimmter Pakete zu verhindern und daraus resultierenden Datenverlust oder Verzögerung zu reduzieren.

Die Veröffentlichung befasst sich mit einer anhand einer Gewichtung arbeitender Berechnungsvorschrift zur Verknüpfung von Eingangs- und Ausgangsports. Dabei besteht eine Matrix aus Elementen, die jeweils eine Gewichtung für eine Vermittlung eines bestimmten Eingangsports des Datenpaketes mit einem bestimmten Ausgangsport einer Vermittlungsvorrichtung wiedergeben. Die Zeilen und Spalten der Matrix entsprechen den Eingangs- und Ausgangsport der Vermittlungseinrichtung für Datenpakete. In jeder Spalte der Matrix wird eine maximal große Gewichtung ausgewählt und als akzeptierte Verknüpfung zwischen einem Eingangs- und Ausgangsport markiert. Im weiterem Verlauf der Berechnung wird der ausgewählte Eingangsport bzw. die dem Eingangsport entsprechende Zeile der Matrix nicht weiter benutzt.

Aus der Veröffentlichung "Priority-based high-speed switch scheduling for ATM networks" von Chao-Ju Hou et al. Local Computer network, 1995, Proceedings 20th Conference on Minneapolis, MN, US 16-19 Oktober 1995, Los Alamitos, CA, USA, IEEE Comput Soc., US 16. Oktober 1995, Seite 19-28 ist eine Paketvermittlungsvorrichtung bekannt, die einem iterativ und parallel arbeitenden Algorithmus zur Bestimmung der Verknüpfungen zwischen Eingangsports und Ausgangsports verwendet. Anstatt nach dem Zufallsprinzip werden die Verknüpfungen anhand von Listen mit Prioritäten bestimmt. Die Verwendung des Algorithmus eignet sich besonders in Paketvermittlungseinrichtungen mit einer großen Anzahl an Ein- und Ausgangsports.

Der Erfindung liegt die Aufgabe zugrunde, eine schnell berechnete Vermittlung von Datenpaketen innerhalb einer Paketvermittlungsvorrichtung zu ermöglichen.

Die Aufgabe wird durch eine Paketvermittlungsvorrichtung mit mehreren Ein- und Ausgangsports und wenigstens einer Vermittlungseinheit bestehend aus einer Koppelmatrix und einer Zuteileinheit zur Unterteilung von Spalten einer Zustandsmatrix in Gruppen gelöst. Die Zuteileinheit bildet anhand einer auf den mehreren Gruppen von Spalten der Zustamdsmatrix parallel arbeitenden Berechnungsvorschrift eine vorläufigen Entscheidungsmatrix, die aus mehreren akzeptierten Verknüpfungen besteht. Die Zuteileinheit ist auch zur Auswahl der Verknüpfung mit der größeren Gewichtung vorgesehen, falls in einer vorläufigen Entscheidungsmatrix für ein Eingangsport mehrere Verknüpfungen akzeptiert wurden, wobei ein verknüpfter Eingangsport in der nächsten Spalte aller Gruppen nicht berücksichtigt wird. Des weiteren ist die Zuteileinheit durch Iteration zur Verknüpfung der Eingangsports mit den Ausgangsports vorgesehen bis für alle Eingangsports jeweils eine Verknüpfung mit einem Ausgangsport ermittelt wurde.

Eine Paketvermittlungsvorrichtung besteht aus mehreren Leitungseinheiten (Line Card) und mehreren Vermittlungseinheiten (Switch Card). Zu Komponenten einer Leitungseinheit zählt als wesentliche Komponente eine Portsteuerung. Jede Portsteuerung ist mit mehreren parallel arbeitenden Vermittlungseinheiten verbunden und hat die Aufgabe an der Paketvermittlungsvorrichtung ankommende, zu vermittelnde Pakete nach Priorität und gewünschten Ausgangsport der Paketvermittlungsvorrichtung in Warteschlangen anzuordnen.

Jede Vermittlungseinheit der Paketvermittlungsvorrichtung besteht aus einer Koppelmatrix (Crosspoint Matrix) und einer Zuteileinheit (Arbiter). Die Konfiguration der Koppelmatrix wird in regelmäßigen Zeitabständen durch die Zuteileinheit mittels einer Berechnungsvorschrift neu bestimmt und somit neu Verknüpfungen zwischen Ein- und Ausgangsport der Paketvermittlungsvorrichtung für die Vermittlung der Pakete erstellt.

Eine Zustandsmatrix der Paketvermittlungsvorrichtung enthält mehrere Elemente, die eine Gewichtung jeder Verknüpfung eines Eingangsports mit einem Ausgangsport repräsentieren. Die Gewichtung wird durch die Portsteuerung generiert, somit kann die Portsteuerung die Zuteileinheit informieren ob und wie dringend die sich im Eingangport befindenden Pakete vermittelt werden sollten. Eine Gewichtung kann Angaben über die Priorität und Klasse der Pakete bzw. die Wartzeit oder Größe einer Warteschlange beinhalten.

Eine Zeile der Zustandsmatrix entspricht einem Eingangsport und jede Spalte entspricht einem Ausgangsport der Paketvermittlungsvorrichtung. Die Zuteileinheit führt gleichzeitig auf jeweils einer Gruppe von Spalten eine Berechnungsvorschrift aus. Dabei kann die Gruppe von Spalten aus einer Mehrzahl von Spalten bestehen, die nicht zwangläufig nebeneinander in der Zustandsmatrix angeordneten sein müssen. Zwei oder mehreren benachbarten Spalten können aber ebenfalls eine Gruppe bilden. Nach der Ausführung der Berechnungsvorschrift markiert die Zuteileinheit jede akzeptierte Verknüpfung in einer ersten, vorläufigen Entscheidungsmatrix.

Bei der Berechnung der Verknüpfungen müssen zwei Bedingungen erfüllt werden. Ein Eingangsport kann nicht gleichzeitig mit mehrere Ausgangsports und/oder ein Ausgangsport kann nicht mit mehreren Eingangsports verknüpft werden. Die Ergebnisse der parallel ablaufende Berechnungsvorschriften werden in der ersten Entscheidungsmatrix festgehalten. Durch die parallele Abarbeitung der Gruppen von Spalten können jedoch einem Eingangsport mehrere Ausgangsports zugewiesen werden. Aus diesem Grund wird in jeder Zeile der ersten Entscheidungsmatrix die Verknüpfung mit der größten Gewichtung ausgewählt und in einer zweiten Entscheidungsmatrix notiert.

Die Zuteileinheit bestimmt eine endgültige Entscheidungsmatrix zur Konfiguration der Koppelmatrix durch ein iteratives Verfahren. Ein Iterationsschritt besteht aus einer Ausführung der parallel arbeitenden Berechnungsvorschrift und Bildung der aus den ausgewählten Verknüpfungen bestehenden Entscheidungsmatrix. Dabei bildet die Zuteileinheit die Gruppen aus den Spalten, für die noch keine Verknüpfung ermittelt wurde bzw. wendet die Berechnungsvorschrift auf die Zeilen und Spalten an, für deren Eingangsport keine akzeptierte Verknüpfung mit einem Ausgangsport erzielt wurde. Im günstigsten Fall führt ein Iterationsschritt zur Verknüpfung von allen Eingangs- und Ausgangsports.

Durch eine iterativ Bestimmung der endgültigen Entscheidungsmatrix kann sicher gestellt werden, dass günstige Verknüpfungen der Eingangsports mit den Ausgangsports erstellt werden, die zu einer schnelle und zuverlässige Vermittlung von Datenpaketen führen.

In jeder Spalte einer Gruppe der Zustandsmatrix wird die Verknüpfung mit der größten Gewichtung ausgewählt und als akzeptierte Verknüpfung zwischen einem Eingangs- und Ausgangsport markiert. In jeder Gruppe von Spalten wird der ausgewählte Eingangsport bzw. die dem Eingangsport entsprechende Zeile im weiterem Verlauf der Berechnungsvorschrift nicht berücksichtigt und deshalb entsprechend markiert.

Die Portsteuerung erzeugt und versendet in regelmäßigen Zeitabständen die Gewichtungen zur Bestimmung einer Konfiguration der Koppelmatrix an die Zuteileinheit. Eine bevorzugte Ausführungsform der Zustandsmatrix enthält Elemente, die jeweils einen Unterschied zwischen einer aktuellen durch die Portsteuerung erzeugten Gewichtung einer Verknüpfung und einer im vorher liegenden Zeitabstand erzeugten Gewichtung repräsentieren.

Die Erfindung betrifft auch eine Vermittlungseinheit für eine Paketvermittlungsvorrichtung mit mehreren Ein- und Ausgangsports. Die Vermittlungseinheit besteht aus einer Koppelmatrix und einer Zuteileinheit zur Steuerung der Koppelmatrix, wobei in der Zuteileinheit eine Zustandsmatrix mit Elementen vorgesehen ist, die jeweils eine Gewichtung einer Verknüpfung zwischen einem Eingangsport und einem Ausgangsport der Paketvermittlungsvorrichtung repräsentieren und deren Zeilen jeweils einem Eingangsport und deren Spalten jeweils einem Ausgangsport entsprechen. Die Zuteileinheit bildet mittels einer auf mehrere Gruppen von Spalten der Zustandsmatrix parallel arbeitender Berechnungsvorschrift eine erste Entscheidungsmatrix. Die erste Entscheidungsmatrix besteht aus mehreren akzeptierten Verknüpfungen zwischen den Eingangs- und Ausgangsports der Paketvermittlungsvorrichtung.

Weiterhin betrifft die Erfindung eine Zuteileinheit zur Steuerung der Koppelmatrix einer Vermittlungseinheit für eine Paketvermittlungsvorrichtung mit mehreren Ein- und Ausgangsports. Dabei ist in der Zuteileinheit eine Zustandsmatrix mit Elementen vorgesehen, die jeweils eine Gewichtung einer Verknüpfung zwischen einem Eingangsport und einem Ausgangsport der Paketvermittlungsvorrichtung repräsentieren und deren Zeilen jeweils einem Eingangsport und deren Spalten jeweils einem Ausgangsport entsprechen. Die Zuteileinheit bildet mittels einer auf mehrere Gruppen von Spalten der Zustandsmatrix parallel arbeitender Berechnungsvorschrift eine erste Entscheidungsmatrix. Die erste Entscheidungsmatrix besteht aus mehreren akzeptierten Verknüpfungen zwischen den Eingangs- und Ausgangsports der Paketvermittlungsvorrichtung.

Die Erfindung betrifft weiterhin ein Vermittlungserfahren für eine Paketvermittlungsvorrichtung mit mehreren Ein- und Ausgangsports und wenigstens einer Vermittlungseinheit. Die Vermittlungseinheit besteht aus einer Koppelmatrix und einer Zuteileinheit zur Steuerung der Koppelmatrix. Dabei ist in der Zuteileinheit eine Zustandsmatrix mit Elementen, die jeweils eine Gewichtung einer Verknüpfung zwischen einem Eingangsport und einem Ausgangsport der Paketvermittlungsvorrichtung repräsentieren, vorgesehen und deren Zeilen jeweils einem Eingangsport und deren Spalten jeweils einem Ausgangsport entsprechen. Die Zuteileinheit bildet mittels eines auf mehrere Gruppen von Spalten der Zustandsmatrix parallel arbeitender Berechnungsvorschrift eine ersten Entscheidungsmatrix, die aus mehreren akzeptierten Verknüpfungen besteht.

Ein Ausführungsbeispiel der Erfindung wird nachstehend anhand der Figuren näher erläutert. Es zeigt:
- Fig. 1: eine Paketvermittlungsvorrichtung,
- Fig. 2: eine auf eine Gruppe von Spalten angewandte Berechnungsvorschrift,
- Fig. 3: eine parallel auf mehrere Gruppen von Spalten angewandte Berechnungsvorschrift zur Vermittlung und
- Fig.4: Darstellung einer Verknüpfung der Gruppen von Spalten.

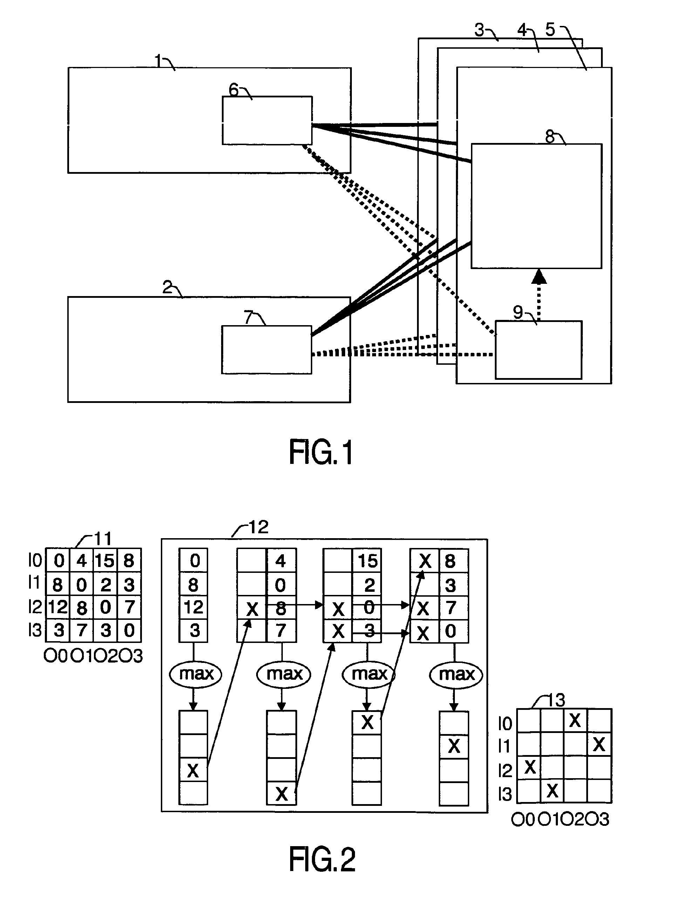

Eine in Fig. 1 dargestellte Paketvermittlungsvorrichtung besteht aus zwei Leitungseinheiten 1 und 2 und mehreren Vermittlungseinheiten 3 bis 5. Die Anzahl der Leitungseinheiten 1 und 2 ist häufig viel Größer als zwei z.B. 64, im Ausführungsbeispiel wurde sie aufgrund einer übersichtlichen Darstellung auf zwei beschränkt. Die Leitungseinheiten 1 und 2 bestehen jeweils aus unterschiedlichen für die Beschreibung des Ausführungsbeispiels nicht relevanten und deshalb nicht dargestellten Komponenten wie einer optische Übertragungseinheit, Rahmengenerator, Netzwerkprozessor etc., sowie einer für das Ausführungsbeispiel wesentlichen Portsteuerung 6 und 7. Jede Vermittlungseinheit 3 bis 5 besteht aus einer Koppelmatrix 8 und einer Zuteileinheit 9. Sowohl die Zuteileinheit 9 sowie die Koppelmatrix 8 jeder parallel arbeitenden Vermittlungseinheit 3 bis 5 sind jeweils mit der Portsteuerung 6 und 7 verbunden.

Datenpakete konstanter Länge werden als Zellen bezeichnet. Da die Zellen konstanter Länge bei der Vermittlung leichter zu handhaben sind als Pakete wechselnder Größe, werden die ankommenden Pakete innerhalb der Leitungseinheiten 1 und 2 in Zellen konstanter Länge zerteilt und in Warteschlangen zwischengespeichert. Nach einer erfolgreichen Vermittlung, d.h. akzeptierte Zuordnung jeweils eines Eingangsports mit einem Ausgangsport, werden die Zellen aus der Warteschlange entfernt.

Anhand einer Gewichtung kann die Portsteuerung die Zuteileinheit informieren ob und wie dringend die sich im Eingangport befindenden Zelle vermittelt werden sollten. Die Gewichtung kann Angaben über die Priorität und Klasse der Pakete bzw. die Wartzeit oder Größe einer Warteschlange im Eingangport beinhalten.

Die Portsteuerung 6 und 7 sendet die zur Bestimmung der Konfiguration der Koppelmatrix notwendigen Informationen, u.a. die Gewichtung an die Zuteileinheit 9.

Nachdem die Zuteileinheit die Konfiguration der Koppelmatrix 8 ermittelt hat und die Konfiguration sowohl an die Portsteuerung als auch an die Koppelmatrix verschickt hat, wird die Koppelmatrix 8 jeder Vermittlungseinheit entsprechend konfiguriert. Die Port steuerung 6 und 7 versendet in regelmäßigen Zeitabständen den sog. Zellperioden die Zellen zur Vermittlung an die Koppelmatrix 8.

In Fig. 2 wird eine durch die Zuteileinheit 9 ausgeführte und auf eine Gruppe von Spalten angewandte Berechnungsvorschrift zur Konfiguration der Koppelmatrix 8 dargestellt. Fig. 2 besteht aus einer Zustandsmatrix 11, einer Gruppe 12 von Spalten, und einer Entscheidungsmatrix 13.

Die Zustandsmatrix 11 entspricht einer Paketvermittlungsvorrichtung mit vier Eingangsports (Input) 10 bis I3 und vier Ausgangsports (Output) O0 bis O3. Sie enthält sechzehn Elemente, welche die Gewichtung jeder Verknüpfung eines Eingangsports 10 bis I3 mit einem Ausgangsport O0 bis O3 repräsentieren.

Im Ausführungsbeispiel der Fig. 2 wurde die Anzahl der Spalten und Zeilen bzw. der Eingangs- und Ausgangsport auf vier beschränkt, um eine übersichtliche Darstellungsform zu erzielen. Die Anzahl der Gruppen wurde auf eine Gruppe reduziert, die aus allen Spalten der Zustandsmatrix 11 besteht.

Die angewandte Berechnungsvorschrift setzt sich zusammen aus vier Schritten:
- In der erste Spalte der Zustandsmatrix 11 wird die größte Gewichtung der Spalte bestimmt.
- In der nächsten Spalte wird ebenfalls die größte Gewichtung der Spalte unter der Bedingung bestimmt, dass die Gewichtung der zuvor ausgewählten Zeile bzw. Eingangsports nicht berücksichtigt wird.
- Bei der Bestimmung der größten Gewichtung der nächsten Spalte, werden die Gewichtungen der zuvor ausgewählten Zeilen bzw. Eingangsports nicht berücksichtigt.
- Die Bestimmung der größten Gewichtung jeder Spalte wird bis zur letzten Spalte der Zustandsmatrix fortgeführt.

Die Zuteileinheit wendet die Berechnungsvorschrift auf die Gruppe 12 von Spalten an und bestimmt die Gewichtung des Eingangsports I2 als die größte Gewichtung der ersten Spalte bzw. des Ausgangsports O0. Die ausgewählte Gewichtung wird als eine akzeptierte Verknüpfung zwischen den Eingangsport I2 und Ausgangsport O0 gekennzeichnet. Bei der Bestimmung der größten Gewichtung der nächsten Spalte wird die Gewichtung des Eingangsports I2 nicht berücksichtigt und die Verknüpfung des Eingangsports I3 mit dem Ausgangsport O1 gekennzeichnet.

Für den Ausgangsport O2 werden die Gewichtungen der Eingangsports I0 und I1 bei der Auswahl der größten Gewichtung berücksichtigt und der Eingangsport I0 als die akzeptierte Verknüpfung bestimmt. Auf diese Weise kann für den Ausgangsport O3 nur der Eingangsport I3 als akzeptierte Verknüpfung bestimmt werden.

Die akzeptierten Verknüpfungen werden in der Entscheidungsmatrix 13 gekennzeichnet.

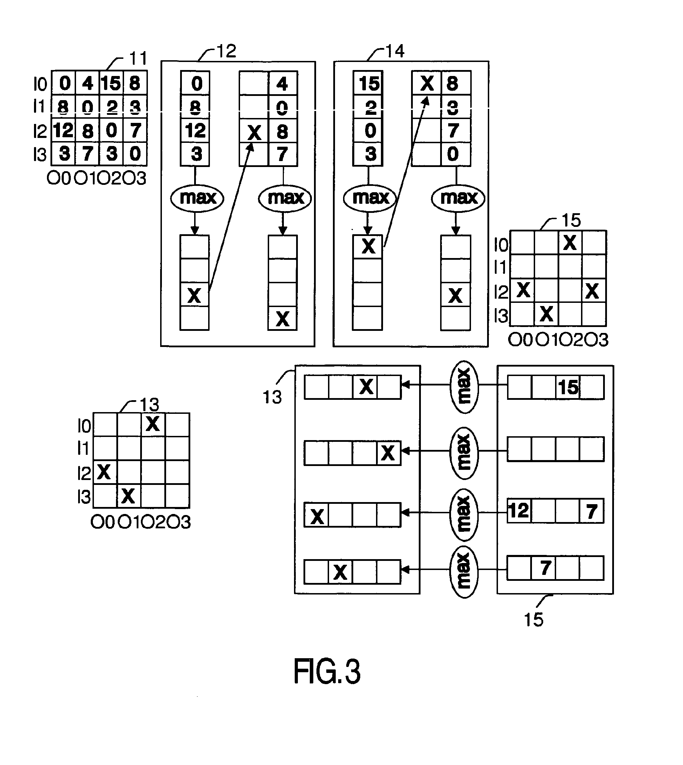

Fig. 3 verdeutlicht eine parallel und iterativ angewandte und in Fig. 2 beschriebene Berechnungsvorschrift zur Vermittlung. Die Zustandsmatrix 11, Entscheidungsmatrix 13 und Gruppe 12 von Spalten werden ergänzt durch eine zweite Gruppe 14 und eine vorläufige Entscheidungsmatrix 15.

Die Spalten der Zustandsmatrix 11 wurden in Gruppen 12 und 14 zu je zwei Spalten unterteilt. In jeder Gruppe 12 und 14 werden parallel die in Fig. 2 beschriebene Berechnungsvorschrift durch die Zuteileinheit 9 ausgeführt.

Die Ergebnisse der zwei Spalten werden in der vorläufigen Entscheidungsmatrix 15 festgehalten. Die Spalten der ersten Gruppe 12 wurden mit Eingangsport I2 bzw. I3 und die Spalten der zweiten Gruppe 14 wurden mit dem Eingangsport I0 bzw. I2 verknüpft. Durch die parallele Abarbeitung der zwei Gruppen wurde Eingangsport I2 sowohl dem Ausgangsport O0 als auch dem Ausgangsport O3 zugewiesen.

Aus diesem Grund wird in jeder Zeile der vorläufigen Entscheidungsmatrix 15 die größte Gewichtung als akzeptierte Verknüpfung bestimmt. Die gekennzeichnet Verknüpfung der ersten Zeile der vorläufigen Entscheidungsmatrix 15 wird als akzeptierte Verknüpfung in die Entscheidungsmatrix 13 übernommen. Für den Eingangsport I1 wurde in der vorläufigen Entscheidungsmatrix 15 keine Verknüpfung notiert, deshalb entfällt auch in der Entscheidungsmatrix 13 eine Verknüpfung eines Ausgangsports mit dem Eingangsport I1. Da für Eingangsport 12 zwei Verknüpfungen ausgewählt wurde, wird anhand der Gewichtung entschieden welche der Verknüpfung akzeptiert wird.

In der Entscheidungsmatrix 13 wird die Verknüpfung mit der größeren Gewichtung zeptiert, deshalb wird der Eingangsport 12 mit dem Ausgangsport 00 als akzeptierte Verknüpfung markiert. Für den Eingangsport I3 wird die aus der vorläufigen Entscheidungsmatrix 15 gekennzeichnete Verknüpfung als akzeptierte Verknüpfung übernommen.

Die Verknüpfungen der Entscheidungsmatrix 13 werden durch Iteration verbessert, indem die Zuteileinheit 9 die parallel arbeitende Berechnungsvorschrift auf die Zeilen der Zustandsmatrix 11 anwendet, für deren Eingangsport keine Verknüpfung mit einem Ausgangsport erzielt wurde. Gleichzeitig werden nur die noch nicht verknüpften Ausgangsports berücksichtigt.

Da für den Eingangsport I1 keine Verknüpfung mit einem Ausgangsport ermittelt wurde, wird die Berechnungsvorschrift iterativ auf die Zustandsmatrix 11 angewendet. Dabei werden die bereits verknüpften Eingangsports I0, I2 und I3 sowie die Ausgangsports O0 bis O2 nicht länger berücksichtigt.

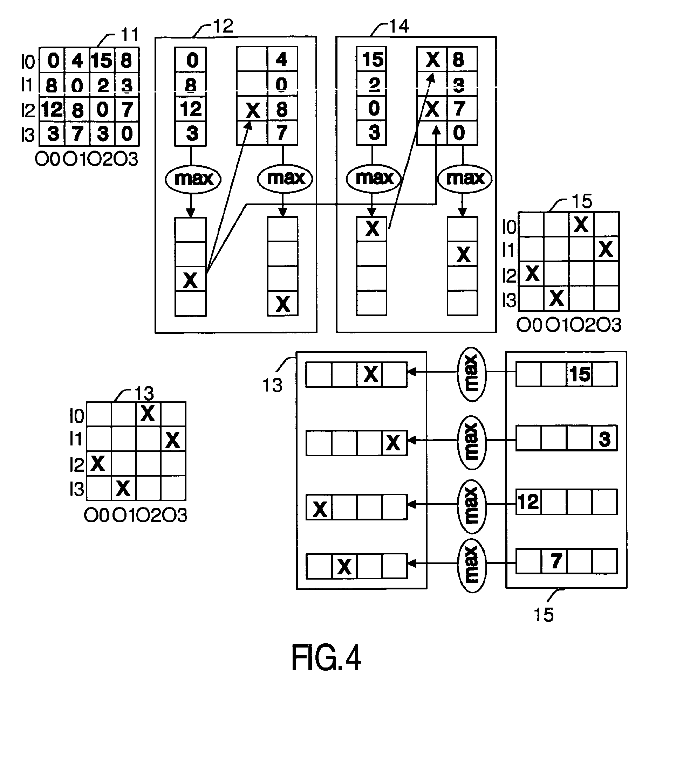

In Fig. 4 wird die parallel Abarbeitung der Gruppen 12 und 14 durch eine Verknüpfung der Gruppen 12 und 14 verbessert.

Die Spalten der Zustandsmatrix 11 wurden in Gruppen 12 und 14 zu je zwei Spalten unterteilt. In jeder Gruppe 12 und 14 werden parallel die in Fig. 2 beschriebene Berechnungsvorschrift durch die Zuteileinheit 9 ausgeführt. Dabei wird die Berechnungsvorschrift durch eine Verknüpfung der Gruppen 12 und 14 ergänzt.

Die angewandte Berechnungsvorschrift jeder Gruppe wird parallel durch die Zuteileinheit 9 auf allen Gruppen ausgeführt und setzt sich zusammen aus vier Schritten:
- In der erste Spalte jeder Gruppe wird die größte Gewichtung der Spalte bestimmt.
- In der nächsten Spalte wird ebenfalls die größte Gewichtung der Spalte unter der Bedingung bestimmt, dass die Gewichtung der zuvor ausgewählten Zeile bzw. Eingangsports in allen Gruppen nicht berücksichtigt wird.
- Bei der Bestimmung der größten Gewichtung der nächsten Spalte, werden die Gewichtungen der zuvor ausgewählten Zeilen bzw. Eingangsports nicht berücksichtigt.
- Die Bestimmung der größten Gewichtung jeder Spalte wird bis zur letzten Spalte der Zustandsmatrix fortgeführt.

Die Ergebnisse der zwei Spalten werden in der vorläufigen Entscheidungsmatrix 15 festgehalten. Die Spalten der ersten Gruppe 12 wurden mit Eingangsport I2 bzw. I3 und die Spalten der zweiten Gruppe 14 wurden mit dem Eingangsport I0 bzw. I1 verknüpft. Durch die Verknüpfung der Gruppen wurde Eingangsport I2 nicht gleichzeitig dem Ausgangsport O0 als auch dem Ausgangsport O3 zugewiesen.

Weiterhin wird in jeder Zeile der vorläufigen Entscheidungsmatrix 15 die größte Gewichtung als akzeptierte Verknüpfung bestimmt. Die gekennzeichnet Verknüpfung der ersten Zeile der vorläufigen Entscheidungsmatrix 15 wird als akzeptierte Verknüpfung in die Entscheidungsmatrix 13 übernommen. Für den Eingangsport I1 wurde in der vorläufigen Entscheidungsmatrix 15 das Ausgangsport O3 notiert, deshalb enthält auch die Entscheidungsmatrix 13 eine Verknüpfung des Ausgangsports O3 mit dem Eingangsport I1. Für Eingangsport I2 wurde eine Verknüpfung mit Ausgangsport O0. In der Entscheidungsmatrix 13 werden die Verknüpfung mit der größeren Gewichtung akzeptiert, falls für einen Eingangsport mehrere Verknüpfungen in der Entscheidungsmatrix 15 notiert wurden.

Wenn in der Entscheidungsmatrix 13 nicht alle Eingangsports I0 bis I3 verknüpft wurden, kann die Entscheidungsmatrix 13 durch eine Iteration verbessert werden, indem die Zuteileinheit 9 die parallel arbeitende Berechnungsvorschrift auf die Zeilen der Zustandsmatrix 11 anwendet, für deren Eingangsport keine Verknüpfung mit einem Ausgangsport erzielt wurde. Gleichzeitig werden nur die noch nicht verknüpften Ausgangsport berücksichtigt.

## Patentansprüche

1. Paketvermittlungsvorrichtung mit mehreren Ein- und Ausgangsports und wenigstens einer Vermittlungseinheit (3 bis 5) bestehend aus einer Koppelmatrix und einer Zuteileinheit (9) zur Steuerung der Koppelmatrix (8), wobei
- die Zuteileinheit zur Erzeugung einer Zustandsmatrix (11) vorgesehen ist, deren Zeilen jeweils einem Eingangsport (I0 bis 13) und deren Spalten jeweils einem Ausgangsport (00 bis 03) entsprechen,
- die Zustandsmatrix Elemente enthält, die jeweils eine Gewichtung einer Verknüpfung zwischen einem Eingangsport (10 bis I3) und einem Ausgangsport (00 bis 03) der Paketvermittlungsvorrichtung repräsentieren und
- die Zuteileinheit (9) zur Bildung einer aus Elementen zur Kennzeichnung ausgewählter Verknüpfungen bestehenden Entscheidungsxnatrix (13) vorgesehen ist,
**dadurch gekennzeichnet,**
**dass** die Zuteileinheit (9) zur Unterteilung der Spalten in Gruppen (12 und 14) der Zustandsmatrix (11) vorgesehen ist, und
**dass** die Zuteileinheit anhand einer auf den mehreren Gruppen von Spalten (12 und 14) der Zustandsmatrix parallel arbeitenden Berechnungsvorschrift zur Bildung einer vorläufigen Entscheidungsmatrix (15), die aus mehreren akzeptierten Verknüpfungen besteht, vorgesehen ist, und
**dass** die Zuteileinheit- zur Auswahl der Verknüpfung mit der größeren Gewichtung vorgesehen ist, falls in einer vorläufigen Entscheidungsmatrix(15) für ein Eingangsport (I0 bis 13) mehrere Verknüpfungen akzeptiert wurden, wobei ein verknüpfter Eingangsport (10 bis I3) in der nächsten Spalte aller Gruppen (12 und 14) nicht berücksichtigt wird, und
**dass** die Zuteileinheit (9) durch Iteration zur Verknüpfung der Eingangsports (10 bis I3) mit den Ausgangsports (00 bis 03) vorgesehen ist bis für alle Eingangsports (10 bis I3) jeweils eine Verknüpfung mit einem Ausgangsport (O0 bis 03) ermittelt wurde.

2. Paketvermittlungsvorrichtung nach Anspruch 1
**dadurch gekennzeichnet,**
**dass** die Spalten einer Gruppe (12 und 14) durch mindestens eine weitere Spalte getrennt in der Zustandsmatrix (11) angeordnet sind.

3. Paketvermittlungsvorrichtung nach Anspruch 1
**dadurch gekennzeichnet,**
**dass** die Zustandsmatrix (11) Elemente enthält, die jeweils einen Unterschied zwischen einer aktuellen und einer zuvor durch eine Portsteuerung (6, 7) der Paketvermittlungsvorrichtung erzeugten Gewichtung einer Verknüpfung zwischen einem Eingangsport (10 bis 13) und einem Ausgangsport (00 bis 03) der Paketvermittlungsvorrichtung repräsentieren.

4. Vermittlungseinheit für eine Paketvermittlungsvorrichtung mit mehreren Ein- und Ausgangsports, welche eine Koppelmatrix und eine Zuteileinheit (9) zur Steuerung der Koppelmatrix (8) aufweist, wobei
- die Zuteileinheit (9) zur Erzeugung einer Zustandsmatrix (11) vorgesehen ist, deren Zeilen jeweils einem Eingangsport (I0 bis 13) und deren Spalten jeweils einem Ausgangsport (00 bis 03) entsprechen,
- die Zustandsmatrix (11) Elemente enthält, die jeweils eine Gewichtung einer Verknüpfung zwischen einem Eingangsport (10 bis 13) und einem Ausgangsport (O0 bis 03) der Paketvermittlungsvorrichtung repräsentieren und
- die Zuteileinheit (9) zur Bildung einer aus Elementen zur Kennzeichnung ausgewählter Verknüpfungen bestehenden Entscheidungsmatrix (13) vorgesehen ist,
**dadurch gekennzeichnet,**
**dass** die Zuteileinheit (9) zur Unterteilung der Spalten in Gruppen (12 und 14) der Zustandsmatrix (11) vorgesehen ist, und
**dass** die Zuteileinheit anhand einer auf den mehreren Gruppen von Spalten (12 und 14) der Zustandsmatrix parallel arbeitenden Berechnungsvorschrift zur Bildung einer vorläufigen Entscheidungsmatrix (15), die aus mehreren akzeptierten Verknüpfungen besteht, vorgesehen ist, und
**dass** die Zuteileinheit zur Auswahl der Verknüpfung mit der größeren Gewichtung vorgesehen ist, falls in einer vorläufigen Entscheidungsmatrix (15) für ein Eingangsport (I0 bis 13) mehrere Verknüpfungen akzeptiert wurden, wobei der verknüpfte Eingangsport (10 bis 13) in der nächsten Spalte aller Gruppen (12 und 14) nicht berücksichtigt wird, und
**dass** die Zuteileinheit (9) durch Iteration zur Verknüpfung der Eingangsports (I0 bis 13) mit den Ausgangsports (00 bis 03) vorgesehen ist bis für alle Eingangsports (10 bis 13) jeweils eine Verknüpfung mit einem Ausgangsport (00 bis 03) ermittelt wurde.

5. Zuteileinheit (9) zur Steuerung der Koppelmatrix (8) in einer Vermittlungseinheit (3 bis 5) einer Paketvermittlungsvorrichtung mit mehreren Ein- und Ausgangsports, wobei
- die Zuteileinheit zur Erzeugung einer Zustandsmatrix (11) vorgesehen ist, deren Zeilen jeweils einem Eingangsport (I0 bis I3) und deren Spalten jeweils einem Ausgangsport (00 bis 03) entsprechen,
- die Zustandsmatrix Elemente enthält, die jeweils eine Gewichtung einer Verknüpfung zwischen einem Eingangsport (10 bis I3) und einem Ausgangsport (O0 bis 03) der Paketvermittlungsvorrichtung repräsentieren und
- die Zuteileinheit (9) zur Bildung einer aus Elementen zur Kennzeichnung ausgewählter Verlmüpfungen bestehenden Entscheidungsmatrix (13) vorgesehen ist,
**dadurch gekennzeichnet,**
**dass** die Zuteileinheit (9) zur Unterteilung der Spalten in Gruppen (12 und 14) der Zustandsmatrix (11) vorgesehen ist, und
**dass** die Zuteileinheit anhand einer auf den mehreren Gruppen von Spalten (12 und 14) der Zustandsmatrix parallel arbeitenden Berechnungsvorschrift zur Bildung einer vorläufigen Entscheidungsmatrix (15), die aus mehreren akzeptierten Verknüpfungen besteht, vorgesehen ist, und
**dass** die Zuteileinheit zur Auswahl der Verknüpfung mit der größeren Gewichtung vorgesehen ist, falls in einer vorläufigen Entscheidungsmatrix (15) für ein Eingangsport (I0 bis I3) mehrere Verlmüpfungen akzeptiert wurden, wobei der verknüpfte Eingangsport in der nächsten Spalte aller Gruppen (12 und 14) nicht berücksichtigt wird, und
**dass** die Zuteileinheit (9) durch Iteration zur Verknüpfung der Eingangsports (I0 bis I3) mit den Ausgangsports (00 bis 03) vorgesehen ist bis für alle Eingangsports (I0 bis 13) jeweils eine Verknüpfung mit einem Ausgangsport (O0 bis 03) ermittelt wurde.

6. Vermittlungsverfahren für eine Paketvermittlungsvorrichtung mit mehreren Ein- und Ausgangsports und wenigstens einer Vermittlungseinheit (3 bis 5) bestehend aus einer Koppelmatrix und einer Zuteileinheit (9) zur Steuerung der Koppelmatrix (8), wobei
- in der Zuteileinheit (9) eine Zustandsmatrix (11) erzeugt wird, deren Zeilen jeweils einem Eingangsport (10 bis 13) und deren Spalten jeweils einem Ausgangsport (00 bis 03) entsprechen,
- die Zustandsmatrix (11) Elemente enthält, die jeweils eine Gewichtung einer Verknüpfung zwischen einem Eingangsport (10 bis 13) und einem Ausgangsport (00 bis 03) der Paketvermittlungsvorrichtung repräsentieren und
- die Zuteileinheit (9) eine aus Elementen zur Kennzeichnung ausgewählter Verknüpfungen bestehende Entscheidungsmatrix (13) bildet,
dass die Zuteileinheit (9) die Spalten in Gruppen (12 und 14) der Zustandsmatrix (11) unterteilt, und
dass die Zuteileinheit anhand einer auf den mehreren Gruppen von Spalten (12 und 14) der Zustandsmatrix parallel arbeitenden Berechnungsvorschrift eine vorläufige Entscheidungsmatrix (15), die aus mehreren akzeptierten Verknüpfungen besteht, bildet, und
dass die Zuteileinheit die Verknüpfung mit der größeren Gewichtung auswählt, falls in einer vorläufigen Entscheidungsmatrix (15) für ein Eingangsport (10 bis I3) mehrere Verknüpfungen akzeptiert wurden, wobei ein verknüpfter Eingangsport (10 bis 13) in der nächsten Spalte aller Gruppen (12 und 14) nicht berücksichtigt wird, und
dass die Zuteileinheit (9) iterativ die Eingangsports (10 bis 13) mit den Ausgangsports (00 bis 03) verknüpft bis für alle Eingangsports (10 bis 13) jeweils eine Verknüpfung mit einem Ausgangsport (00 bis 03) ermittelt wurde.

## Claims

1. A packet switching device with a plurality of input and output ports and at least one switching unit (3 to 5) comprising a coupling matrix and an arbiter unit (9) for controlling the coupling matrix (8), wherein
- the arbiter unit is designed for generating a state matrix (11) whose lines each correspond to an input port (10 to I3) and whose columns each correspond to an output port (00 to 03),
- said state matrix comprises elements which each represent a weighting for an interconnection between an input port (10 to I3) and an output port (00 to 03)of the packet switching device, and
- said arbiter unit (9) is designed for forming a decision matrix (13) consisting of elements for making selected interconnections,
**characterized in that**
the arbiter unit (9) is designed for subdividing the columns into groups (12 and 14) of the state matrix (11), and
the arbiter unit is designed for forming a provisional decision matrix (15) consisting of several accepted interconnections by means of an algorithm acting in parallel on said several groups of columns (12 and 14) of the state matrix, and
the arbiter unit is designed for selecting the interconnection having the highest weighting value if several interconnections were accepted for one input port (10 to I3) in a provisional decision matrix (15), such that an interconnected input port (10 to I3) is not taken into consideration in the next column of all groups (12 and 14), and
the arbiter unit (9) is designed for iteratively connecting the input ports (10 to I3) to the output ports (00 to 03) until for all input ports (10 to I3) a respective connection to an output port (00 to 03) has been established.

2. A packet switching device as claimed in claim 1,
**characterized in that**
the columns of a group (12 and 14) are mutually separated in the state matrix (11) by at least one further column.

3. A packet switching device as claimed in claim 1, **characterized in that** the state matrix (11) comprises elements which each represent a difference between a current weighting of an interconnection between an input port (10 to I3) and an output port (00 to 03) of the packet switching device and a weighting previously generated by the port control (6, 7).

4. A switching unit for a packet switching device comprising several input and output ports, which switching unit (3 to 5) comprises a coupling matrix and an arbiter unit (9) for controlling the coupling matrix (8), wherein
- the arbiter unit is designed for generating a state matrix (11) whose lines each correspond to an input port (10 to 13) and whose columns each correspond to an output port (00 to 03),
- said state matrix comprises elements which each represent a weighting for an interconnection between an input port (10 to 13) and an output port (00 to 03) of the packet switching device, and
- said arbiter unit (9) is designed for forming a decision matrix (13) consisting of elements for making selected interconnections,
**characterized in that**
the arbiter unit (9) is designed for subdividing the columns into groups (12 and 14) of the state matrix (11), and
the arbiter unit is designed for forming a provisional decision matrix (15) consisting of several accepted interconnections by means of an algorithm acting in parallel on said several groups of columns (12 and 14) of the state matrix, and
the arbiter unit is designed for selecting the interconnection having the highest weighting value if several interconnections were accepted for one input port (10 to 13) in a provisional decision matrix (15), such that an interconnected input port (10 to I3) is not taken into consideration in the next column of all groups (12 and 14), and
the arbiter unit (9) is designed for iteratively connecting the input ports (10 to 13) to the output ports (00 to 03) until for all input ports (10 to 13) a respective connection to an output port (00 to 03) has been established.

5. An arbiter unit (9) for controlling the coupling matrix (8) in a switching unit (3 to 5) of a packet switching device comprising several input and output ports, wherein
- the arbiter unit is designed for generating a state matrix (11) whose lines each correspond to an input port and whose columns each correspond to an output port,
- said state matrix comprises elements which each represent a weighting for an interconnection between an input port and an output port of the packet switching device, and
- said arbiter unit (9) is designed for forming a decision matrix (13) consisting of elements for making selected interconnections,
**characterized in that**
the arbiter unit (9) is designed for subdividing the columns into groups (12 and 14) of the state matrix (11), and
the arbiter unit is designed for forming a provisional decision matrix (15) consisting of several accepted interconnections by means of an algorithm acting in parallel on said several groups of columns (12 and 14) of the state matrix, and
the arbiter unit is designed for selecting the interconnection having the highest weighting value if several interconnections were accepted for one input port (10 to 13) in a provisional decision matrix (15), such that an interconnected input port (10 to 13) is not taken into consideration in the next column of all groups (12 and 14), and
the arbiter unit (9) is designed for iteratively connecting the input ports (10 to 13) to the output ports (00 to 03) until for all input ports (10 to 13) a respective connection to an output port (00 to 03) has been established.

6. A switching method for a packet switching device comprising several input and output ports and at least one switching unit (3 to 5) comprising a coupling matrix and an arbiter unit (9) for controlling the coupling matrix (8), wherein
- a state matrix (11) is generated in the arbiter unit (9), the lines of said matrix each corresponding to an input port (10 to 13) and the columns of said matrix each corresponding to an output port (00 to 03),
- the state matrix (11) comprises elements which each represent a weighting of an interconnection between an input port (10 to 13) and an output port (00 to 03) of the packet switching device, and
- the arbiter unit (9) forms a decision matrix (13) consisting of elements for marking selected interconnections,
**characterized in that**
the arbiter unit (9) subdivides the columns into groups (12 and 14) of the state matrix (11), and
the arbiter unit forms a provisional decision matrix (15) consisting of several accepted interconnections by means of an algorithm acting in parallel on said several groups of columns (12 and 14) of the state matrix, and
the arbiter unit selects the interconnection having the highest weighting value if several interconnections were accepted for one input port (10 to 13) in a provisional decision matrix (15), such that an interconnected input port (10 to 13) is not taken into consideration in the next column of all groups (12 and 14), and
the arbiter unit (9) iteratively connects the input ports (10 to 13) to the output ports (00 to 03) until for all input ports (10 to I3) a respective connection to an output port (00 to 03) has been established.

## Revendications

1. Dispositif de commutation de paquets avec plusieurs ports d'entrée et de sortie et au moins une unité de commutation (3 à 5) composée d'une matrice de couplage et d'une unité de répartition (9) pour la commande de la matrice de couplage (8), dans lequel
- l'unité de répartition (9) est prévue pour la production d'une matrice d'état (11) dont les lignes correspondent respectivement à un port d'entrée (10 à 13) et dont les colonnes correspondent respectivement à un port de sortie (00 à 03),
- la matrice d'état (11) contient des éléments qui représentent respectivement une pondération d'une liaison entre un port d'entrée (10 à 13) et un port de sortie (00 à 03) du dispositif de commutation de paquets et
- l'unité de répartition (9) est prévue pour la formation d'une matrice de décision (13) composée d'éléments en vue de la caractérisation de liaisons sélectionnées,
**caractérisé en ce**
**que** l'unité de répartition (9) est prévue pour la répartition des colonnes en groupes (12 et 14) de la matrice d'état (11) et
**que** l'unité de répartition est prévue à l'aide d'une règle de calcul au fonctionnement parallèle sur les plusieurs groupes de colonnes (12 et 14) de la matrice d'état pour la formation d'une matrice de décision provisoire (15) qui se compose de plusieurs liaisons acceptées et
**que** l'unité de répartition est prévue pour la sélection de la liaison avec la pondération la plus grande si, dans une matrice de décision provisoire (15) pour un port d'entrée (10 à 13), plusieurs liaisons ont été acceptées, un port d'entrée (10 à 13) relié n'étant pas pris en considération dans la colonne suivante de tous les groupes (12 et 14); et
**que** l'unité de répartition (9) est prévue par itération pour la liaison des ports d'entrée (10 à 13) avec les ports de sortie (00 à 03) jusqu'à ce que une liaison avec un port de sortie (00 à 03) ait respectivement été déterminée pour tous les ports d'entrée (10 à 13).

2. Dispositif de commutation de paquets selon la revendication 1,
**caractérisé en ce**
**que** les colonnes d'un groupe (12 et 14) sont disposées séparées par au moins une autre colonne dans la matrice d'état (11).

3. Dispositif de commutation de paquets selon la revendication 1,
**caractérisé en ce**
**que** la matrice d'état (11) contient des éléments qui représentent respectivement une différence entre une pondération actuelle et une pondération produite précédemment par une commande de port (6, 7) du dispositif de commutation de paquets d'une liaison entre un port d'entrée (I0 à 13) et un port de sortie (00 à 03) du dispositif de commutation de paquets.

4. Unité de commutation pour un dispositif de commutation de paquets avec plusieurs ports d'entrée et ports de sortie qui présente respectivement une matrice de couplage et une unité de répartition (9) pour la commande de la matrice de couplage (8), dans laquelle
- l'unité de répartition (9) est prévue pour la production d'une matrice d'état (11) dont les lignes correspondent respectivement à un port d'entrée (10 à 13) et dont les colonnes correspondent respectivement à un port de sortie (00 à 03),
- la matrice d'état (11) contient des éléments qui représentent respectivement une pondération d'une liaison entre un port d'entrée (10 à 13) et un port de sortie (00 à 03) du dispositif de commutation de paquets et
- l'unité de répartition (9) est prévue pour la formation d'une matrice de décision (13) composée d'éléments en vue de la caractérisation de liaisons sélectionnées,
**caractérisé en ce**
**que** l'unité de répartition (9) est prévue pour la répartition des colonnes en groupes (12 et 14) de la matrice d'état (11) et
**que** l'unité de répartition est prévue à l'aide d'une règle de calcul au fonctionnement parallèle sur les plusieurs groupes de colonnes (12 et 14) de la matrice d'état pour la formation d'une matrice de décision provisoire (15) qui se compose de plusieurs liaisons acceptées et
**que** l'unité de répartition est prévue pour la sélection de la liaison avec la pondération la plus grande si, dans une matrice de décision provisoire (15) pour un port d'entrée (10 à 13), plusieurs liaisons ont été acceptées, un port d'entrée (10 à 13) relié n'étant pas pris en considération dans la colonne suivante de tous les groupes (12 et 14); et
**que** l'unité de répartition (9) est prévue par itération pour la liaison des ports d'entrée (10 à 13) avec les ports de sortie (00 à 03) jusqu'à ce que une liaison avec un port de sortie (00 à 03) ait respectivement été déterminée pour tous les ports d'entrée (10 à 13).

5. Unité de répartition (9) pour la commande de la matrice de couplage (8) dans une unité de commutation (3 à 5) d'un dispositif de commutation de paquets avec plusieurs ports d'entrée et ports de sortie dans laquelle
- l'unité de répartition (9) est prévue pour la production d'une matrice d'état (11) dont les lignes correspondent respectivement à un port d'entrée (10 à 13) et dont les colonnes correspondent respectivement à un port de sortie (00 à 03),
- la matrice d'état (11) contient des éléments qui représentent respectivement une pondération d'une liaison entre un port d'entrée (10 à 13) et un port de sortie (00 à 03) du dispositif de commutation de paquets et
- l'unité de répartition (9) est prévue pour la formation d'une matrice de décision (13) composée d'éléments en vue de la caractérisation de liaisons sélectionnées,
**caractérisé en ce**
**que** l'unité de répartition (9) est prévue pour la répartition des colonnes en groupes (12 et 14) de la matrice d'état (11) et
**que** l'unité de répartition est prévue à l'aide d'une règle de calcul au fonctionnement parallèle sur les plusieurs groupes de colonnes (12 et 14) de la matrice d'état pour la formation d'une matrice de décision provisoire (15) qui se compose de plusieurs liaisons acceptées et
**que** l'unité de répartition est prévue pour la sélection de la liaison avec la pondération la plus grande si, dans une matrice de décision provisoire (15) pour un port d'entrée (10 à 13), plusieurs liaisons ont été acceptées, un port d'entrée (10 à 13) relié n'étant pas pris en considération dans la colonne suivante de tous les groupes (12 et 14); et
**que** l'unité de répartition (9) est prévue par itération pour la liaison des ports d'entrée (10 à 13) avec les ports de sortie (00 à 03) jusqu'à ce que une liaison avec un port de sortie (00 à 03) ait respectivement été déterminée pour tous les ports d'entrée (10 à 13).

6. Procédé de commutation pour un dispositif de commutation de paquets avec plusieurs ports d'entrée et de sortie et au moins une unité de commutation (3 à 5) composée d'une matrice de couplage et d'une unité de répartition (9) pour la commande de la matrice de couplage (8), dans lequel
- l'unité de répartition (9) est prévue pour la production d'une matrice d'état (11) dont les lignes correspondent respectivement à un port d'entrée (10 à 13) et dont les colonnes correspondent respectivement à un port de sortie (00 à 03),
- la matrice d'état (11) contient des éléments qui représentent respectivement une pondération d'une liaison entre un port d'entrée (10 à 13) et un port de sortie (00 à 03) du dispositif de commutation de paquets et
- l'unité de répartition (9) est prévue pour la formation d'une matrice de décision (13) composée d'éléments en vue de la caractérisation de liaisons sélectionnées,
**caractérisé en ce**
**que** l'unité de répartition (9) répartit les colonnes en groupes (12 et 14) de la matrice d'état (11) et
**que** l'unité de répartition forme, à l'aide d'une règle de calcul au fonctionnement parallèle sur les plusieurs groupes de colonnes (12 et 14) de la matrice d'état, une matrice de décision provisoire (15) qui se compose de plusieurs liaisons acceptées et
**que** l'unité de répartition sélectionne la liaison avec la pondération la plus grande si, dans une matrice de décision provisoire (15) pour un port d'entrée (10 à 13), plusieurs liaisons ont été acceptées, un port d'entrée (10 à 13) relié n'étant pas pris en considération dans la colonne suivante de tous les groupes (12 et 14); et
**que** l'unité de répartition (9) relie par itération les ports d'entrée (10 à 13) avec les ports de sortie (00 à 03) jusqu'à ce qu'une liaison avec un port de sortie (00 à 03) ait respectivement été déterminée pour tous les ports d'entrée (10 à 13).
